# EUROPÄISCHE PATENTANMELDUNG

(11) **EP 4 339 548 A1**
(43) Veröffentlichungstag der Anmeldung: **20.03.2024**
(21) Anmeldenummer: 23196018.8
(22) Anmeldetag: 07.09.2023
(51) Int. Cl.: F41G 3/02, F41G 7/22, F41H 13/00, G01S 7/495

(54) **DIRCM MIT PRÄDIKTION VON MWS-DATEN**

(30) Priorität: 16.09.2022 DE 102022003403
(71) Anmelder: Diehl Defence GmbH & Co. KG, 88662 Überlingen (DE)
(72) Erfinder: Weiß, Heiko, 98553 Schleusingen (DE); Mauder, Markus, 90482 Nürnberg (DE)
(74) Vertreter: Diehl Patentabteilung

(57) **Zusammenfassung**

Bei einem Verfahren zum Betreiben eines DiRCM-Systems (10) wird im Falle einer von einem Warnmodul (12) detektierten Bedrohung (6):
- an einer Schnittstelle (14) eine zeitliche Folge (16) von jeweiligen Ortungswerten (WO) der Bedrohung (6) empfangen, die das Warnmodul (12) bereitstellt,
- ein Prädiktionszeitpunkt (ZP) gewählt, an dem ein Prädiktionswert (WP) für einen Ort (O) zu ermitteln ist, an dem sich die Bedrohung (6) zum Prädiktionszeitpunkt (ZP) vermutlich aufhalten wird,
- mit Hilfe eines Filters (22) eine Änderungsrate (Ä) der Ortungswerte (WO) über der Zeit (t) ermittelt,
- mit Hilfe eines Prädiktors (24) ausgehend von einem der Ortungswerte (WO) als Ausgangswert (WA) und dem dazugehörigen Ortungszeitpunkt (ZO) als Ausgangszeitpunkt (ZA) anhand der Änderungsrate (Ä) der Prädiktionswert (WP) für den vermutlichen Ort (O) der Bedrohung (6) am Prädiktionszeitpunkt (ZP) ermittelt,
- der Prädiktionswert (WP) wenigstens einem der DIRCM-Module (18) als Sollwert (WS) bereitgestellt.

Ein DIRCM-System (10) enthält die Schnittstelle (14) zum Warnmodul (12), mindestens das DIRCM-Modul (18), das mit der Schnittstelle (14) verbundene Filter (22), den Prädiktor (24), und eine Steuereinheit (26) zur Ausführung des Verfahrens.

Eine DIRCM-Schutzanordnung (8) enthält das DIRCM-System (10) und das über die Schnittstelle (14) damit verbundene Warnmodul (12).

Ein Objekt (2) enthält das DIRCM-System oder die DIRCM-Schutzanordnung (8).

## Beschreibung

Die Erfindung betrifft eine DIRCM-Schutzanordnung (Directed Infrared Counter Measures) zum Schutz eines Objekts gegen eine sich annähernde Bedrohung / Ziel. Die Schutzanordnung enthält mindestens ein Warnmodul zur Detektion und Ortung der Bedrohung und mindestens ein DIRCM-Modul, das auf die Bedrohung einzuweisen / auszurichten ist, um diese dann mit Hilfe von DIRCM-Maßnahmen abzuwehren, d.h. zu verfolgen ("Tracking") und mit einem Laserstrahl zu stören ("Jamming").

Aus der EP 3 800 483 A1 ist ein Verfahren bekannt zur Einweisung eines beweglichen Detektors eines DIRCM-Moduls eines DIRCM-Systems auf ein anfliegendes Ziel. Dabei wird eine Einweisungsposition des Ziels empfangen und dieser ein Einweisungsbereich zugeordnet, wird einer Zielposition des Detektors ein Zielbereich zugeordnet, wird gemäß einer Suchstrategie ein Suchbereich größer dem Zielbereich gewählt, der mindestens den Einweisungsbereich abdeckt, wird der Suchbereich durch Bewegen des Zielbereiches nach dem Ziel abgesucht, bis das Ziel erfolgreich detektiert oder der Suchbereich erfolglos abgesucht wurde. Ein DIRCM-System enthält eine Schnittstelle zu einem Warnsystem für die Einweisungsposition für das Ziel, die DIRCM-Module mit Detektor und eine Steuer- und Auswerteeinheit für das Verfahren. Eine DIRCM-Anlage enthält das DIRCM-System und das Warnsystem. Ein Objekt enthält die am Objekt montierte DIRCM-Anlage.

Aufgabe der vorliegenden Erfindung ist es, Verbesserungen in Bezug auf eine DIRCM-Schutzanordnung anzugeben.

Die Aufgabe wird gelöst durch ein Verfahren gemäß Patentanspruch 1. Das Verfahren dient zum Betreiben eines DIRCM-Systems einer DIRCM-Schutzanordnung. Die Erfindung geht dabei davon aus, dass das DIRCM-System zusammen mit wenigstens einem Warnmodul als zumindest Teil einer DIRCM-Schutzanordnung fest an einem Objekt angebracht ist. Die DIRCM-Schutzanordnung und damit das DIRCM-System dient zum Schutz des Objekts vor bzw. gegen eine sich an das Objekt annähernde Bedrohung. Das Objekt ist insbesondere ein Flugzeug, die Bedrohung ist insbesondere ein Lenkflugkörper, der dazu dienen soll, das Objekt anzugreifen bzw. zu zerstören. Zu einem jeweiligen Zeitpunkt befindet sich die Bedrohung an einem jeweiligen Ort.

Die Erfindung geht weiterhin davon aus, dass das DIRCM-System folgendes enthält:
Das DIRCM-System enthält mindestens eine Schnittstelle zum Warnmodul. Dieses Warnmodul dient dazu bzw. ist dazu eingerichtet, die Bedrohung zu detektieren. D.h. das Warnmodul erkennt, ob überhaupt eine Bedrohung existiert, die sich dem Objekt nähert und diesem gefährlich werden könnte. Für den Fall, dass eine derartige Bedrohung existiert und vom Warnmodul detektiert wird, ermittelt das Warnmodul Ortungswerte von jeweiligen Orten, an welchen sich die Bedrohung zu einem bestimmten jeweiligen Zeitpunkt, nämlich dem jeweiligen Ortungszeitpunkt, gerade befindet, bzw. wo sie zu diesem Zeitpunkt geortet wurde, sich also befand. Diese Ermittlung führt das Warnmodul zyklisch bzw. zeitlich hintereinander folgend immer wieder aus. Jeder so ermittelte Ort wird also auf einen Ortungswert abgebildet, dem der jeweilige Ortungszeitpunkt zugeordnet ist. Ortungswerte sind z.B. Paare von Elevation / Azimut einer Geraden vom Warnmodul bzw. dessen Ortungssensor zur Bedrohung, gemessen im Bezugssystem des Warnmoduls. Dieses Bezugssystem entspricht insbesondere dem Bezugssystem des Objekts, da das Warnmodul fest am Objekt angebracht ist. Der Ortungswert entspricht damit der sogenannten DoA (Direction of Arrival) der Bedrohung relativ zum Warnmodul bzw. Objekt, grob gesprochen also der Richtung einer Sichtlinie vom Objekt zur Bedrohung hin.

Das Ortungsmodul stellt eine zeitliche Folge der ermittelten Ortungswerte an der Schnittstelle bereit. Die zeitliche Folge ist z.B. als ein elektronischer Datensatz oder eine Folge von Daten, ein Datenstrom, bereitgestellt. Die "Folge" bzw. "zeitlich" ist auf die zeitliche Abfolge der Ortungszeitpunkte bezogen, nicht zwingend auf die Präsentation der Ortungswerte an der Schnittstelle. Die Ermittlung und Bereitstellung der Ortungswerte dauert eine gewisse Verarbeitungszeit, d.h. die Bereitstellung der Ortungswerte an der Schnittstelle erfolgt jeweils später, also nach dem zugehörigen Ortungszeitpunkt. Dieser bildet vielmehr einen "Zeitstempel" zum Ortungswert. Die zugehörigen Ortungszeitpunkte können dabei entweder mit über die Schnittstelle übermittelt werden oder anhand des Zeitpunkts des Eintreffens der jeweiligen Ortungswerte im DIRCM-System ermittelt oder zumindest geschätzt / rekonstruiert (z.B. bekannte Laufzeiten / Verarbeitungszeiten im Warnmodul oder vom Warnmodul zur Schnittstelle) werden.

Das DIRCM-System enthält mindestens ein DIRCM-Modul. Dieses dient bzw. ist dazu eingerichtet, anhand eines dem DIRCM-Modul vorzugebenden bzw. bereitzustellenden Sollwertes eines Ortes einer Bedrohung auf diesen Ort und damit auf die Bedrohung ausgerichtet zu werden (sogenannte "Einweisung") und ab einem Startzeitpunkt die Bedrohung dann zu orten, was ein anfängliches Detektieren der Bedrohung einschließt: Der "Ort" ist derjenige, an dem die Bedrohung zumindest potenziell vermutet wird.

Hintergrund ist, dass das DIRCM-Modul nur einen sehr eng begrenzten Zielbereich aufweist, in dem die Bedrohung bzw. das Ziel hochgenau geortet und verfolgt werden kann. Dieser Zielbereich ist starr an ein physikalisch verschwenkbares Element des DIRCM-Moduls gekoppelt und dieses muss daher physikalisch möglichst präzise auf die Bedrohung ausgerichtet werden. Denn nur wenn sich die Bedrohung tatsächlich innerhalb des Zielbereiches (der einen "Sichtbereich / Erfassungsbereich" darstellt) befindet, kann das DIRCM-Modul die Bedrohung erfolgreich detektieren, orten und verfolgen, um diese auch erfolgreich bestrahlen und damit abwehren zu können. Die Einweisung muss also möglichst präzise auf den tatsächlichen Ort der Bedrohung erfolgen. Erhält das DIRCM-Modul also einen Sollwert für den vermutlichen Ort der Bedrohung (Einweisungsposition), muss dessen besagtes Element erst physikalisch eingeschwenkt werden, sodass der Ort der Bedrohung sich innerhalb des Zielbereiches befindet. Erst dann - also nach physikalischem Einschwenken auf die Einweisungsposition / den Sollwert - ergibt sich ein Startzeitpunkt, um die Bedrohung innerhalb des Zielbereiches (elektronisch) zu detektieren. Der Startzeitpunkt ist also der Beginn der Detektion und genauen Ortung der Bedrohung durch das DIRCM-Modul, nachdem das Modul physikalisch auf den durch den Sollwert vorgegebenen Ort eingeschwenkt ist. Diese Detektion / Ortung kann nur erfolgreich sein, wenn sich die Bedrohung tatsächlich innerhalb des Zielbereiches befindet; der Sollwert muss also im Startzeitpunkt bekannt sein. Nur nach erfolgreicher elektronischer Detektion der Bedrohung im Zielbereich kann die Bedrohung vom DIRCM-Modul verfolgt ("Verfolgen / Tracking") und bestrahlt ("Bestrahlen / Stören / Jamming") werden, um die Bedrohung erfolgreich abzuwehren. Der Startzeitpunkt ist also der Zeitpunkt, an dem das DIRCM-Modul auf die potenzielle Bedrohung eingewiesen, physikalisch ausgerichtet und zur Detektion bereit ist.

Bei dem Verfahren wird im Falle einer vom Warnmodul detektierten Bedrohung (also ab dem Zeitpunkt, ab dem die Bedrohung vom Warnmodul detektiert wurde) wie folgt vorgegangen:
An der Schnittstelle wird die zeitliche Folge von Ortungswerten empfangen, die von mindestens einem der Warnmodule dort bereitgestellt wurde.

Außerdem wird ein Prädiktionszeitpunkt gewählt. Dies ist ein in der Zukunft liegender Zeitpunkt, an dem ein Prädiktionswert für einen Ort zu ermitteln ist, an dem sich die Bedrohung zum Prädiktionszeitpunkt vermutlich aufhalten wird. An diesem (in der Zukunft liegenden Zeitpunkt) soll der vermutete Ort der Bedrohung in Form eines Prädiktionswertes also vorhergesagt / geschätzt / prädiziert werden.

Mit Hilfe eines Filters wird dann durch Filterung der zeitlichen Folge der Ortungswerte eine (anzunehmenderweise ausreichend weit und ausreichend genau in die Zukunft reichende) Änderungsrate der Ortungswerte über der Zeit ermittelt. Das Filter kann diskret, als integrierte Filterschaltung oder in Form einer Programmierung / Festverdrahtung als Soft- oder Firmware realisiert sein.

Mit Hilfe eines Prädiktors wird dann ausgehend von einem der Ortungswerte als Ausgangswert und dem dazugehörigen Ortungszeitpunkt als Ausgangszeitpunkt anhand der Änderungsrate ein Prädiktionswert für den vermutlichen Ort der Bedrohung am Prädiktionszeitpunkt ermittelt. Dieser liegt an oder nach dem Startzeitpunkt; das DIRCM-System ist also zum Prädiktionszeitpunkt tatsächlich bereit, das Objekt auch tatsächlich detektieren zu können. Hier können anstelle eines tatsächlich konkret ermittelten Ortungswertes allerdings auch abgeleitete Werte, z.B. Mittelwert / Interpolation / ... als Ausgangswert verwendet werden. Der Ausgangszeitpunkt ist dann ebenfalls entsprechend zu wählen. Zur Prädiktion wird insbesondere die Zeitdifferenz zwischen Ausgangszeitpunkt und Prädiktionszeitpunkt mit der Änderungsrate multipliziert und das Ergebnis (also eine Ortsveränderung) zum Ausgangswert addiert (insbesondere vektoriell, da es sich z.B. um Raumrichtungen handelt). So ergibt sich der Prädiktionswert als vermuteter bzw. prädizierter Aufenthaltsort der Bedrohung zum Prädiktionszeitpunkt. Der Prädiktionswert wird dann wenigstens einem der DIRCM-Module als Sollwert bereitgestellt.

Das Filter sowie der Prädiktor können jeweils diskret, als integrierte Filterschaltung oder in Form einer Programmierung / Festverdrahtung als Soft- oder Firmware realisiert sein. Die Prädiktion bzw. das gesamte Verfahren bzw. ein entsprechender Algorithmus kann dabei insbesondere im Warnmodul und/oder im DIRCM-System und/oder in einem kommunikativ verbundenen anderen System im oder am Objekt ausgeführt werden. Insbesondere ist also zumindest ein Teil einer das Verfahren ausführenden Steuereinheit dort angeordnet, insbesondere als konzentriertes oder verteiltes System.

Als Folge hiervon erhält das DIRCM-Modul den in der Zukunft vermuteten Prädiktionswert als Sollwert und hat ausreichend Zeit, sich (bzw. sein o.g. Element bzw. seinen Zielbereich) auf den Ort gemäß Prädiktionswert einzuschwenken, so dass bei Erreichen des Prädiktionszeitpunktes (an dem vermutet wird, dass sich die Bedrohung dann tatsächlich am Ort des Prädiktionswertes befindet) die Detektion der Bedrohung im Zielbereich zum Startzeitpunkt beginnen kann. Da davon auszugehen ist, dass bei zutreffender Prädiktion sich die Bedrohung tatsächlich am Ort des Prädiktionswertes und damit im Zielbereich befindet, ist davon auszugehen, dass die Detektion der Bedrohung erfolgreich verläuft und sich somit auch ein erfolgreiches Verfolgen / Tracking und Bestrahlen / Jamming der Bedrohung erreichen lässt.

Welcher der vom Warnmodul ermittelten Ortungswerte im Prädiktor als Ausgangswert genutzt wird, um ausgehend von diesem den Prädiktionswert zu ermitteln, liegt im Ermessen des Fachmanns. Hier ist z.B. denkbar, den jüngsten verfügbaren Ortungswert zu nutzen. Alternativ könnte jedoch auch - falls entsprechende Kriterien vorliegen - ein möglichst verlässlicher Ortungswert / ein Mittelwert / ein interpolierter Wert usw. gewählt werden. Der Ausgangszeitpunkt ist dann entsprechend zu wählen, z.B. als Mittelwert / Interpolation von Ortungszeitpunkten.

Im Rahmen des Verfahrens kann insbesondere eine Anpassung des Prädiktionswertes an die Gegebenheiten des DIRCM-Moduls erfolgen. Z.B. könnte ein DIRCM-Modul Ortungswerte in Form einer Elevation von -90° (exakter Wert ausgeschlossen) bis +90° (exakter Wert eingeschlossen) oder eines Azimuts von -180° (exakter Wert ausgeschlossen) bis +180° (exakter Wert eingeschlossen) erwarten. Eine numerische Prädiktion, die dann z.B. einen Wert von -185° Azimut liefern könnte, müsste daher auf +175° Azimut angepasst werden, um erlaubte Bereichsgrenzen nicht zu überschreiten.

Die Erfindung geht insbesondere davon aus, dass das vorliegend zu schützende Objekt ein mobiles Objekt, insbesondere ein Fahrzeug, insbesondere ein Flugzeug ist. Weiterhin wird davon ausgegangen, dass das Warnmodul insbesondere ein MWS (Missile Warning System) oder ein Teil dessen ist.

Für die folgenden Erläuterungen wird aus Gründen der Anschaulichkeit konkret das Beispiel eines Flugzeuges als Objekt mit einem MWS als Warnmodul und einem JT ("Jamming Turret") als DIRCM-Modul sowie einer DoA (Direction of Arrival, Koordinaten sind Azimut und Elevation) als Ortungswert usw. betrachtet. Die Erläuterungen gelten jedoch sinngemäß jeweils für die abstrakten Oberbegriffe (Objekt statt Flugzeug usw.):
Die Erfindung beruht auf folgenden Überlegungen: Für die erfolgreiche Einweisung (erfolgreiche Detektion einer Bedrohung im Zielbereich) eines DIRCM-Moduls / - Systems (genauer: eines Jamming Turrets (JT) des DIRCM-Moduls) darf der Gesamtfehler der Einweisungsdaten (Differenz des vom Warnmodul ermittelten und übermittelten vermuteten Prädiktionswertes (Sollwert) des Orts der Bedrohung zu deren realem tatsächlichem Ort / Wert im Startzeitpunkt) eine bestimmte Schwelle nicht überschreiten, da die Bedrohung sonst außerhalb des Zielbereichs liegt und nicht erfasst werden kann. Die Einweisungsdaten (Sollwert) enthalten als wesentlichen Bestandteil die DoA der Bedrohung relativ zum Objekt / Flugzeug, gegeben z.B. durch Azimut- und Elevationswinkel, und werden vom Warnmodul (MWS) an das DIRCM-System / -Modul und damit an den JT mit einer bestimmten Zeitverzögerung / Delay gemeldet. Ein derartiges Delay entsteht durch Verarbeitungs- / Signalweiterleitungszeiten im Warnsystem und/oder dem DIRCM-System, Einschwenkzeiten des DIRCM-Systems (JT), Reservezeiten zur Absicherung gegen Timing-Schwankungen usw. Eventuelle Änderungen der DoA, verursacht z.B. durch Lageänderungen des Flugzeugs oder Manöver der Bedrohung (zwischen Ortung durch das MWS und Startzeitpunkt der Detektion im DIRCM-Modul) führen zu einem Einweisungsfehler, der näherungsweise proportional zum Betrag der Zeitverzögerung / Delay und der Änderungsrate der DoA ist. Hierbei ist die Änderung / Bewegung der Bedrohung zu betrachten zwischen dem Ortungswert am Ortungszeitpunkt und dem Startzeitpunkt, wenn das DIRCM-Modul am Startzeitpunkt vom Ortungswert am (inzwischen vergangenen) Ortungszeitpunkt ausgeht. Daneben gehen weitere Anteile in den Gesamteinweisungsfehler ein, z.B. Fehlausrichtungen der MWS-Sensoren (Ortsermittlung) und JTs (DIRCM-Modul) zueinander, die hier nicht betrachtet werden sollen.

DIRCM-Modul und Warnmodul können hierbei nah beieinander (unmittelbar nebeneinander, in einem gemeinsamen Gehäuse, Entfernung klein in Bezug auf das zu schützende Objekt usw.) oder entfernt voneinander liegen. Im ersten Fall können Sie im Rahmen der vorliegenden Erfindung als "ortsgleich" betrachtet werden, was insbesondere die Gleichheit der DoA der Bedrohung betrifft.

Im Falle von Bedrohungen, die Ihren Ort relativ zum Objekt ändern, ist die Einweisung der JTs mit hoher Erfolgswahrscheinlichkeit nur bei geringer Zeitverzögerung / Delay der MWS-Daten bzw. geringer Änderungsrate der DoA möglich. Grund hierfür ist z.B. eine Bedrohung, die das Objekt nicht geradlinig anfliegt oder wenn sich das Koordinatensystem von Flugzeug und damit von Warnmodul aufgrund eines Flugmanövers ändert. Eine Möglichkeit wäre, die Zeitverzögerung / Delay zu begrenzen. Diese ist jedoch nur mit hohem technischem Aufwand (z.B. durch ein dediziertes Datennetz für die MWS-Daten, verbunden mit zusätzlichem Energiebedarf, Zusatzkosten, Zusatzgewicht im Flugzeug und erhöhter Komplexität) und auch dann nicht beliebig reduzierbar. Weiterhin bestünde nur die Möglichkeit, die zulässige Änderungsrate der DoA zu begrenzen. Dies führt zu Beschränkungen der maximal zulässigen Roll- und Nickrate des Flugzeugs während des DIRCM-Betriebs, was wiederum den Schutz des Flugzeugs insgesamt reduziert, da der Pilot bei anfliegenden Bedrohungen keine evasiven Manöver mit hohen Drehraten mehr durchführen kann.

Die Erfindung beruht auf der Idee einer Prädiktion zukünftiger Ortungswerte (in Form des Prädiktionswertes, z.B. der DoA) auf Basis der vom Warnmodul (MWS) zyklisch gemeldeten (bereitgestellten) Ortungswerte (MWS-Daten) sowie ggf. zusätzlicher Daten (z.B. von der Flugzeugnavigation gelieferte Navigationsdaten). Für die Prädiktion werden die Ortungswerte (MWS-Daten) und ggf. weiteren Daten (Navigationsdaten) mit einem geeigneten Filter, z.B. einem Differentiationsfilter oder Kalman Filter, unter Annahme einer bestimmten Dauer der Zeitverzögerung / Delay (Prädiktionshorizont bis zum Prädiktionszeitpunkt) ausgewertet. Der so prädizierte Ortungswert (Prädiktionswert, z.B. DoA) wird dann als kommandierte Blickrichtung (Sollwert für das DIRCM-Modul) für die Einweisung des DIRCM-Moduls (JT) verwendet. Der Prädiktionshorizont kann als konstante oder von anderen Größen abhängige Zeitdauer gesetzt werden. Aufgrund von Fehlereinflüssen wie der (z.B. aufgrund von Rauschen der MWS-Daten) nicht exakt ermittelten Änderungsrate der Ortungswerte (DoA) und der nicht genau bekannten Dauer der Zeitverzögerung / Delay ergibt sich ein Restfehler der Einweisungsdaten, der allerdings im Allgemeinen deutlich kleiner ist als der ursprüngliche Fehler ohne Prädiktion. Somit wird die Erfolgswahrscheinlichkeit der Ersteinweisung durch die Prädiktion der MWS-Daten erhöht.

Der Hauptvorteil ist die Erhöhung der Wahrscheinlichkeit einer erfolgreichen Einweisung des DIRCM-Moduls (JT) trotz Zeitverzögerung / Delay der Ortungswerte (MWS-Daten).

Daneben sind keine Beschränkungen der maximal zulässigen Roll- und Nickrate des Flugzeugs während des DIRCM-Betriebs erforderlich, die zu einer Reduzierung des Schutzes des Flugzeugs insgesamt führen würden.

Ferner sind keine Änderungen der Hardware oder zusätzliche Hardware-Komponenten zur Reduzierung der Zeitverzögerung / Delay der MWS-Daten mit den damit verbundenen Nachteilen (zusätzlicher Energiebedarf, Zusatzkosten, Zusatzgewicht im Flugzeug, erhöhte Komplexität) notwendig.

Gemäß der Erfindung erfolgt eine Prädiktion zur Kompensation der Zeitverzögerung / Delay der MWS-Daten für die Einweisung des JT eines DIRCM-Systems sowie deren Umsetzung durch die Auswahl geeigneter Daten für die Prädiktion, die Auslegung eines geeigneten Filters für die Bestimmung der DoA Änderungsrate und die Auswahl eines geeigneten Prädiktionshorizonts. Durch die Prädiktion der MWS-Daten wird die Wahrscheinlichkeit einer erfolgreichen Ersteinweisung (Einweisung) erhöht und damit die Leistungsfähigkeit des DIRCM-Gesamtsystems insgesamt verbessert. Durch Auswahl geeigneter Daten für die Prädiktion sowie eines geeigneten Filters zur Bestimmung der DoA Änderungsrate können dabei sowohl Lageänderungen des Flugzeugs als auch Manöver der Bedrohung in der Prädiktion berücksichtigt werden. Bei anderen Arten der Prädiktion, die z.B. nur auf Navigationsdaten des Flugzeugs basieren würden, wäre keine Einbeziehung der Manöver der Bedrohung möglich.

Die Erfindung stellt insbesondere ein Verfahren dar, das auf Basis der MWS-Daten sowie ggf. zusätzlicher Daten eine prädizierte DoA für die Einweisung von JTs erzeugt. Dafür werden folgende Schritte zyklisch bzw. bei Bedarf durchlaufen.
1. Initialisierung / Reinitialisierung des Filters: Für die Funktionsfähigkeit des Filters werden sowohl aktuelle als auch zeitlich zurückliegende Daten (zeitliche Folge) benötigt. Daher werden die letzten Werte gespeichert bzw. zyklisch überschrieben. Bei einer neuen Bedrohung sowie bei ggf. situationsbedingt auftretenden Sprüngen der Daten wird eine Reinitialisierung des Filters durchgeführt.
2. Bestimmung der DoA Änderungsrate: Zur Bestimmung der DoA Änderungsrate wird ein Filter, z.B. ein Differentiationsfilter oder ein Kalman Filter, zyklisch ausgewertet.
3. Prädiktion der DoA: Die ebenfalls zyklisch durchgeführte Prädiktion erfolgt auf Basis der DoA Änderungsrate und des angenommenen, konstanten oder von anderen Größen abhängig gesetzten Prädiktionshorizonts, welcher der Zeitverzögerung / Delay der MWS-Daten möglichst genau entspricht.
4. Begrenzung auf den Wertebereich der DoA: Da es bei der Prädiktion (z.B. aufgrund des Rauschens der MWS-Daten) zum Über- bzw. Unterschreiten der zulässigen Wertebereiche der DoA (z.B. Azimut- und Elevationswinkel) kommen kann, wird eine Begrenzungsfunktion für die DoA im Anschluss an die Prädiktion ausgeführt.

Gemäß der Erfindung ergibt sich damit eine DIRCM MWS-Daten-Prädiktion. Es ergibt sich die Prädiktion der MWS-Daten zur Kompensation der Zeitverzögerung / Delay zwischen MWS und einem DIRCM-System mit dem Ziel, die Wahrscheinlichkeit einer erfolgreichen Einweisung in dynamischen Situationen, d.h. mit Änderung der Direction of Arrival (DoA) der Bedrohung relativ zum Flugzeug, zu erhöhen.

In einer bevorzugten Ausführungsform der Erfindung wird der Prädiktionszeitpunkt wie folgt gewählt:
Zunächst wird ein Referenzzeitpunkt gewählt. Hierfür steht eine Reihe von Alternativen zur Auswahl, nämlich
- ein Zeitpunkt einer Meldung der Detektion der Bedrohung vom Warnmodul - insbesondere des Empfangs der Meldung durch das DIRCM-System, oder
- einer der Ortungszeitpunkte, oder
- ein Zeitpunkt einer Bereitstellung eines der Ortungswerte vom Warnmodul - insbesondere an der Schnittstelle, oder
- ein Zeitpunkt einer Bereitstellung der Änderungsrate vom Filter, oder
- ein Zeitpunkt einer Bereitstellung des Prädiktionswertes vom Prädiktor.

Der Zeitpunkt der Bereitstellung der Werte vom Warnmodul ist so zu verstehen: Die zeitliche Folge ist zu jedem Zeitpunkt jeweils auf eine bestimmte Anzahl von Ortungswerten bzw. eine Zeitspanne von zugehörigen Ortungszeitpunkten begrenzt: Als "Zeitpunkt der Bereitstellung" kann dann z.B. der Zeitpunkt der Bereitstellung des letzten, ersten oder mittleren Wertes der Folge gewählt werden.

Ausgehend von dem jeweils gewählten Referenzzeitpunkt wird eine vermutete Totzeit der Schutzanordnung ermittelt. Diese Totzeit spiegelt die bzw. Teile der oben genannten Zeitverzögerung / Delay wieder. Die Totzeit beschreibt eine Minimalzeit, die benötigt wird, um den Prädiktionswert zu erstellen und das DIRCM-Modul in Bereitschaft zur Detektion der Bedrohung zu versetzen (frühestmöglicher Startzeitpunkt nach dem Referenzzeitpunkt). Hierbei werden die vermuteten oder bekannten einzelnen benötigten Zeitspannen (je nach Wahl des Referenzzeitpunktes, Anteile der o.g. Zeitverzögerung / Delay) aufaddiert: Zeitverzögerungen / Delays des Warnmoduls, des Filters, des Prädiktors und des DIRCM-Moduls, z.B. bis zum frühestmöglichen Startzeitpunkt. "Zeitverzögerung / Delay" bzw. Anteile davon ist dabei insbesondere die jeweilige Zeitspanne, die für Datenverarbeitung und -transport innerhalb und zwischen den einzelnen Modulen / Abschnitten / Verarbeitungsstufen benötigt wird. Diese Zeiten sind entweder bekannt oder werden abgeschätzt, zum Beispiel durch theoretische Überlegungen, empirische Versuche, Messungen usw. und fließen so in die Totzeit ein.

Der Prädiktionszeitpunkt wird dann als derjenige Zeitpunkt gewählt, der um die jeweils vermutete Totzeit nach dem jeweils gewählten Referenzzeitpunkt liegt.

Somit kann zumindest die Wahl des Referenzzeitpunktes eindeutig erfolgen. Unsicherheiten verbleiben jeweils einzig bei den gegebenenfalls abzuschätzenden vermuteten Totzeiten.

Insbesondere ist die Totzeit die vermutete Zeit zwischen Referenzzeitpunkt und Startzeitpunkt. Der Startzeitpunkt ist dann auch der Prädiktionszeitpunkt. Die Totzeit kann damit so klein wie möglich gehalten werden, was die Systemgenauigkeit erhöht. Grund hierfür ist, dass also zum (frühestmöglichen) Startzeitpunkt für die Detektion der Bedrohung der Prädiktionswert zur Verfügung gestellt wird.

In die Prädiktion gehen dann die Totzeit und eventuelle weitere (vor dem Referenzzeitpunkt liegende) Delays / Zeitverzögerungen ein, je nachdem, auf welchen Zeitpunkt (Wahl des Referenzzeitpunktes) die ermittelte Änderungsrate bezogen ist, d.h. welcher zeitliche Bezug sich zwischen Referenzzeitpunkt und Ausgangszeitpunkt ergibt.

In einer bevorzugten Variante dieser Ausführungsform wird die vermutete Totzeit konstant gewählt. Somit kann vom Referenzzeitpunkt besonders schnell auf den Prädiktionszeitpunkt geschlossen werden, ohne die Totzeit nochmals individuell ermitteln zu müssen.

In einer alternativen Ausführungsform wird die vermutete Totzeit anhand mindestens einer Kenngröße des Schutzsystems dynamisch ermittelt. Die Kenngröße ist jedes denkbare Charakteristikum des Schutzsystems, welches Einfluss auf eine entsprechende Totzeit haben kann. Insbesondere ist die Kenngröße eine Abweichung der aktuellen Ausrichtung des DIRCM-Moduls von dessen Ausrichtung auf einen der Ortungswerte. Diese Kenngröße gibt zumindest grob an, um wie viel das DIRCM-Modul bzw. dessen mobiles Element verschwenkt werden muss, um den Zielbereich auf die Bedrohung auszurichten. Je mehr Verschwenkung hierbei erforderlich ist, desto größer ist folglich die Totzeit zu wählen. So kann eine situationsgerechte Ermittlung der Totzeit erfolgen.

In einer bevorzugten Ausführungsform ist das Objekt ein mobiles Objekt. Der Prädiktor ermittelt den Prädiktionswert dann auch anhand von Navigationsdaten des Objekts. Derartige Navigationsdaten sind insbesondere bei einem Flugzeug als Objekt dessen Nick-, Roll- oder Gier-Daten, z.B. eine Rollrate. Bewegungen, insbesondere Verkippungen des Objekts führen zwangsläufig zu einer Änderung des Relativ-Ortes (DoA) der Bedrohung relativ zum Objekt. Derartige Änderungen des Ortes können über die Navigationsdaten besonders einfach und präzise in die Prädiktion mit eingebracht werden, da Navigationsdaten des Objekts insbesondere exakt bekannt bzw. ermittelbar sind und ggf. aufgrund bekannter Trägheit eines Flugzeuges selbst gut prädizierbar sind.

In einer bevorzugten Ausführungsform des Verfahrens ermittelt der Prädiktor den Prädiktionswert auch anhand von vermuteten Manöverdaten der Bedrohung. Derartige Manöverdaten sind bzw. beschreiben vermutete zukünftige Änderung des Ortes der Bedrohung. So kann Wissen über die Bedrohung bzw. deren Flugmanöver in die Prädiktion eingebracht werden, um das Prädiktions-Ergebnis zu verbessern. Hierbei handelt es sich z.B. um bekannte begrenzte Bewegungsmöglichkeiten der Bedrohung aufgrund deren Massenträgheit usw.

In einer bevorzugten Ausführungsform wird die von einem der Warnmodule bereitgestellte zeitliche Folge auf ein kritisches Ereignis hin verändert, bevor sie vom Filter gefiltert wird. Dabei werden insbesondere vor oder im Filter, d.h. vor oder während der Filterung, einzelne oder alle Ortungswerte gelöscht, d.h. das Filter teilweise oder vollständig reinitialisiert. Kritische Ereignisse sind zum Beispiel der Übergang von einem zu einem anderen der Warnmodule (MWS-Sensoren) oder ein detektierter, aber den Möglichkeiten der physikalischen Realität widersprechender Sprung in den Ortsdaten oder eine Bereichsüberschreitung zulässiger Werte (z.B. über +180° oder unter -180° Azimut-Winkel, sogenannte "Azimut-Singularität"), usw. So können unzutreffende Filterergebnisse vermieden bzw. die Filterergebnisse verbessert werden.

In einer bevorzugten Ausführungsform wird das Filter wiederholt ausgewertet und die Änderungsrate anhand wenigsten zweier der Auswertungen ermittelt. Die Auswertungen erfolgen zeitlich hintereinander, insbesondere auf Basis einer jeweils veränderten Folge, d.h. z.B. mit aktualisierten Ortungswerten zu späteren Ortungszeitpunkten. Es ergibt sich also eine Folge von Auswertungen des Filters. Insbesondere wird dadurch ein im Wesentlichen übliches Vorgehen gewählt, z.B. Glättung der Prädiktion, Mittelwertbildung von Prädiktionswerten, Prüfung der Plausibilität des Prädiktionswertes, ...

In einer bevorzugten Ausführungsform enthält das DIRCM-System mindestens zwei DIRCM-Module. Anhand des Prädiktionswertes und/oder der Änderungsrate und/oder wenigsten einem der Ortungswerte wird dann wenigstens eines der DIRCM-Module zur Ausrichtung auf die Bedrohung ausgewählt. Es wird also genau ein "passendes" DIRCM-Modul gewählt, nämlich ein solches, in dessen Erfassungsbereich die Bedrohung liegt und/oder voraussichtlich kommt und/oder lange genug für eine erfolgreiche Bestrahlung bleiben wird. So kann zum Beispiel vermieden werden, dass die Übergabe vom Warnmodul an ein DIRCM-Modul erfolgt, das die Bedrohungen nach kürzester Zeit verlieren würde, da diese in prädizierter Weise aus dem Erfassungsbereich des gewählten DIRCM-Moduls gelangen würde.

Die Aufgabe der Erfindung wird auch gelöst durch ein DIRCM-System gemäß Patentanspruch 10.

Das DIRCM-System und zumindest ein Teil dessen möglicher Ausführungsformen sowie die jeweiligen Vorteile wurden sinngemäß bereits im Zusammenhang mit dem erfindungsgemäßen Verfahren erläutert.

In Ergänzung zu oben ist auszuführen, dass die jeweiligen DIRCM-Module fest am Objekt anbringbar bzw. in einem Montage- oder Arbeitszustand der DIRCM-Anordnung am Objekt dort fest angebracht sind, so dass deren Relativposition zum Objekt fixiert ist. Dies bewirkt gleiche Koordinatensysteme des Objekts und der DIRCM-Module bzw. deren fixierte Relativlage zueinander.

Das DIRCM-System enthält das oben erläuterte Filter, das mit der Schnittstelle verbunden ist, um die zeitliche Folge der Ortungswerte zu erhalten. Das Filter dient also dazu bzw. ist dazu eingerichtet, durch Filterung der zeitlichen Folgen der Ortungswerte eine Änderungsrate der Ortungswerte über der Zeit zu ermitteln.

Das DIRCM-System enthält den oben erläuterten Prädiktor. Der Prädiktor dient also dazu bzw. ist dazu eingerichtet, ausgehend von einem der Ortungswerte als Ausgangswert und dem dazugehörigen Ortungszeitpunkt als Ausgangszeitpunkt anhand der Änderungsrate einen Prädiktionswert für einen Ort der Bedrohung zu ermitteln, an dem sich die Bedrohung zum Prädiktionszeitpunkt vermutlich befinden wird.

Das DIRCM-System, insbesondere dessen Prädiktor, dient dazu bzw. ist dazu eingerichtet, den Prädiktionswert wenigstens einem der DIRCM-Module als Sollwert bereitzustellen.

Das DIRCM-System enthält eine Steuereinheit, die zusammen mit dem restlichen DIRCM-System und in Zusammenarbeit mit dem Warnmodul (Empfang von dessen Folgen an der Schnittstelle, die anzunehmenderweise bei einem bestimmungsgemäßen Betrieb des im Schutzsystem arbeitenden DIRCM-Systems vom Warnsystem zur Verfügung gestellt werden) dazu eingerichtet ist, das oben erläuterte Verfahren auszuführen.

Die Aufgabe der Erfindung wird auch gelöst durch eine DIRCM-Schutzanordnung gemäß Patentanspruch 11, wie sie oben bereits im Zusammenhang mit dem Verfahren und dem DIRCM-System beschrieben wurde. Diese dient also bzw. ist eingerichtet zum Schutz des Objekts vor bzw. gegen die Bedrohung.

Die Schutzanordnung enthält das oben beschriebene DIRCM-System und mindestens eines der oben genannten Warnmodule. Diese sind - wie sinngemäß oben zum DIRCM-Modul erläutert - fest am Objekt anbringbar bzw. zu einer entsprechenden Anbringbarkeit eingerichtet und in einem Montagezustand der Schutzanordnung am Objekt tatsächlich dort angebracht. Warnmodul und DIRCM-Modul sind über die Schnittstelle miteinander verbunden, um die Folge wie oben beschrieben überleiten zu können.

Die Schutzanordnung entspricht daher insofern dem DIRCM-System, dass sie zusätzlich das Warnmodul enthält. Die Schnittstelle kann hierbei physikalisch innerhalb der Schutzanordnung vorhanden sein, aber auch nur als "gedachte Schnittstelle" innerhalb der Schutzanordnung existieren, indem intern die Ortungswerte transportiert bzw. verarbeitet werden. Die getroffenen Aussagen zur Schutzanordnung gelten sinngemäß entsprechend auch für das DIRCM-System und umgekehrt.

Die Schutzanordnung und zumindest ein Teil deren möglicher Ausführungsformen sowie die jeweiligen Vorteile wurden sinngemäß bereits im Zusammenhang mit dem erfindungsgemäßen DIRCM-System und dem erfindungsgemäßen Verfahren erläutert.

Die Aufgabe der Erfindung wird auch gelöst durch ein Objekt gemäß Patentanspruch 12 mit einem erfindungsgemäßen DIRCM-System oder mit einer erfindungsgemäßen DIRCM-Schutzanordnung. Diese befinden sich also im Montagezustand am Objekt, sind also fest am Objekt angebracht.

Das Objekt ist insbesondere ein mobiles Objekt, z.B. ein Land- oder Wasser- oder Luftfahrzeug, insbesondere ein Flugzeug.

Das Objekt und zumindest ein Teil dessen möglicher Ausführungsformen sowie die jeweiligen Vorteile wurden sinngemäß bereits im Zusammenhang mit dem erfindungsgemäßen Verfahren, dem erfindungsgemäßen DIRCM-System und der erfindungsgemäßen DIRCM-Schutzanordnung erläutert.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: eine Schutzanordnung an einem Objekt mit anfliegender Bedrohung,
- Figur 2: einen Verlauf von Ortungswerten einschließlich einer Prädiktion über der Zeit,

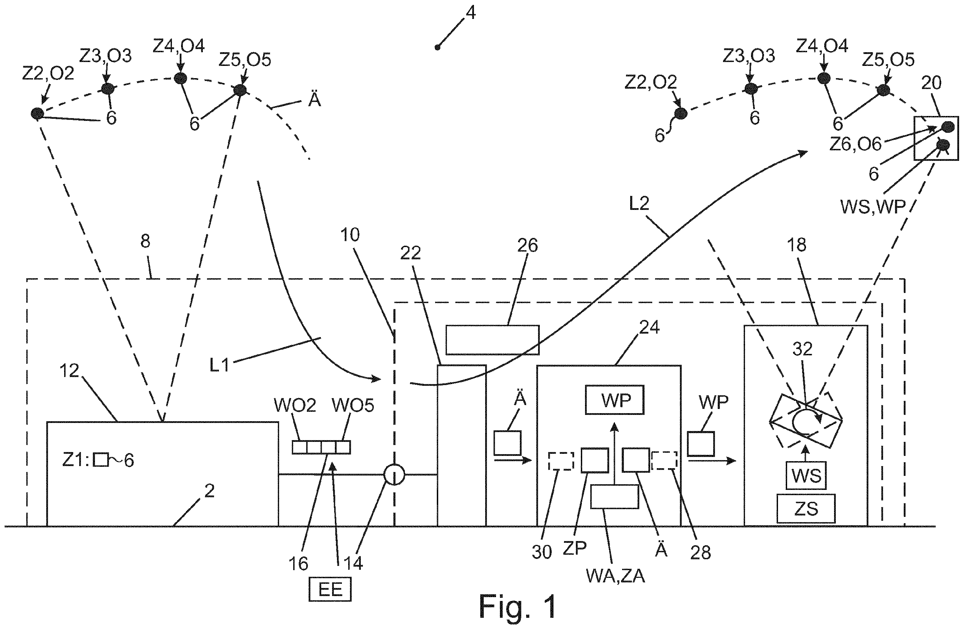

Figur 1 zeigt in stark stilisierter Darstellung ein Objekt 2 in Form eines Flugzeuges, welches sich im Flug in einem Luftraum 4 befindet. An das Objekt 2 nähert sich eine hier ebenfalls nur stilisiert angedeutete Bedrohung 6 in Form einer gelenkten Rakete mit Infrarot-Suchkopf an.

Die Bedrohung 6 befindet sich zu jedem Zeitpunkt Z an einem bestimmten Ort O. Vorliegend sind unter anderem die nacheinander liegenden Zeitpunkte Z2 bis Z6 dargestellt, zu denen sich die Bedrohung tatsächlich an den Orten 02 bis O6 befindet. Die Orte sind hier insofern abstrakt dargestellt, dass deren Entfernung zum Objekt 2 normiert ist, d.h. eine tatsächliche Annäherung der Bedrohung 6 an das Objekt 2 ist nicht dargestellt. Vielmehr zeigt der Ort O der Bedrohung 6 nur die betreffende gestrichelt angedeutete Sichtlinie vom Objekt 2 zur Bedrohung 6 an. Vorliegend ist der Ort O daher vollständig durch die Koordinaten Azimut A und Elevation E der dargestellten Sichtlinie vom Objekt 2 zur Bedrohung 6 in einem nicht weiter dargestellten Koordinatensystem des Objekts 2 beschrieben.

Zum Schutz gegen die sich annähernde Bedrohung 6 ist am Objekt 2 eine DIRCM-Schutzanordnung 8 (angedeutet durch einen gestrichelten Rahmen, im Folgenden kurz auch "Schutzanordnung") fest, nämlich außen an dessen Rumpf, angebracht. Die Schutzanordnung 8 enthält ein ebenso fest am Objekt 2 angebrachtes DIRCM-System 10 (ebenfalls durch einen gestrichelten Rahmen angedeutet) sowie ein ebenso fest am Objekt 2 angebrachtes Warnmodul 12. Das Warnmodul 12 ist über eine Schnittstelle 14 des DIRCM-Systems 10 mit diesem zum Datenaustausch verbunden.

Das Warnmodul 12 ist wie folgt eingerichtet bzw. arbeitet im Betrieb wie folgt: Es detektiert die Bedrohung 6 zu einem Zeitpunkt Z1, nämlich dann, wenn diese in seinen Erfassungsbereich eintritt und detektiert werden kann. Dies ist in Figur 1 nur symbolisch angedeutet. Ab dem Zeitpunkt Z1 ist daher bekannt, dass sich die Bedrohung 6 dem Objekt 2 nähert und diesem gefährlich werden könnte.

Für diesen Fall, also ab diesem Zeitpunkt Z1, also sobald die Bedrohung 6 vom Warnmodul 12 detektiert wurde, wird folgendes Verfahren ausgeführt:
Zeitlich wiederholt, nämlich zu den jeweils späteren aufeinanderfolgenden Zeitpunkten T2 bis T5, die daher Ortungszeitpunkte ZO2=Z2 bis ZO5=Z5 darstellen, ermittelt das Warnmodul 12 den jeweiligen Ort O2 bis O5, an dem sich die Bedrohung zum Ortungszeitpunkt ZO2 bis ZO5 jeweils befunden hat. "Befunden hat" ist deswegen zutreffend, da die Ermittlung des Ortes O2 bis O5 eine jeweilige bestimmte Zeitspanne in Anspruch nimmt, die auf den eigentlichen Zeitpunkt Z2 bis Z5 folgt. Die Orte O2 bis O5 werden daher erst zu späteren Zeitpunkten ermittelt, wenn sich die Bedrohung 6 von diesem jeweiligen Ort O2 bis O5 gegebenenfalls bereits wegbewegt hat. Das Warnmodul 12 ermittelt für die jeweiligen Orte O2 bis O5 einen jeweiligen Ortungswert WO2 bis WO5. Jeder Ortungswert WO ist hier jeweils ein Wertepaar von Azimut A und Elevation E der jeweiligen Sichtlinie, die vom Objekt 2 (genauer gesagt dem Ort eines nicht näher erläuterten, die Ortung durchführenden Detektors am Warnmodul 12) zur Bedrohung 6 bzw. dem ermittelten Ort O führt.

Die Ortungswerte WO2 bis WO5 werden vom Warnmodul 12 als zeitliche Folge 16 ausgegeben und an der Schnittstelle 14 dem DIRCM-System 10 bereitgestellt und dort empfangen. Die Ermittlung des jeweiligen Ortungswertes WO und die Bereitstellung an der Schnittstelle 14 benötigt jeweils eine gewisse Laufzeit L1 (in Figur 1 angedeutet durch einen Pfeil), so dass der Ortungswert WOn zum jeweiligen Zeitpunkt ZOn + L1 (n=2-5) an der Schnittstelle 14 bereitsteht.

Das DIRCM-System 10 enthält ein entsprechend fest am Objekt 2 angebrachtes DIRCM-Modul 18. Das DIRCM-Modul 18 ist wie folgt eingerichtet bzw. arbeitet im Betrieb wie folgt: Auf Vorgabe eines Sollwertes WS eines Ortes O (hier also eines Wertepaares aus Azimut A und Elevation E) richtet es sich auf den entsprechenden Ort O aus und versucht, dann ab einem Startzeitpunkt ZS innerhalb eines den Ort O umgebenden vergleichsweise kleinen Zielbereiches 20 eine Bedrohung 6 zu detektieren und anschließend hochgenau zu orten. Diese Detektion und Ortung kann nur erfolgreich sein, wenn sich die Bedrohung 6 zum Startzeitpunkt ZS tatsächlich innerhalb des Zielbereiches 20 befindet. Mit erfolgreicher Ortung beginnt das DIRCM-Modul 18 die Bedrohung 6 ständig nachzuverfolgen (Tracking) und gleichzeitig mit einem deren Suchkopf störenden Laserstrahl zu bestrahlen (Jamming) und somit die Bedrohung 6 vom Objekt 2 abzuwehren. Letztere Schritte (Tracking und Jamming) sind nicht Gegenstand der vorliegenden Patentanmeldung und werden hier nicht näher betrachtet.

In der Realität liegen Warnmodul 12 und DIRCM-Modul 18 so nahe beieinander, dass in Bezug auf die Bedrohung 6 diese als ortsgleich betrachtet werden können. Um die Verhältnisse vorliegend besser darstellen zu können, ist die Bedrohung 6 und die jeweiligen Bewegungsverhältnisse usw. teilweise doppelt bzw. identisch, einmal aus Sicht des Warnmoduls 12 und einmal aus Sicht des DIRCM-Moduls 18, dargestellt. Das DIRCM-Modul 18 enthält ein Filter 22. Das Filter 22 ist mit der Schnittstelle 14 verbunden und ist wie folgt eingerichtet bzw. arbeitet im Betrieb wie folgt: es führt eine zeitliche Filterung der Folge 16 der Ortungswerte WO durch. Hierdurch ermittelt es eine Änderungsrate Ä der Ortungswerte WO über der Zeit t.

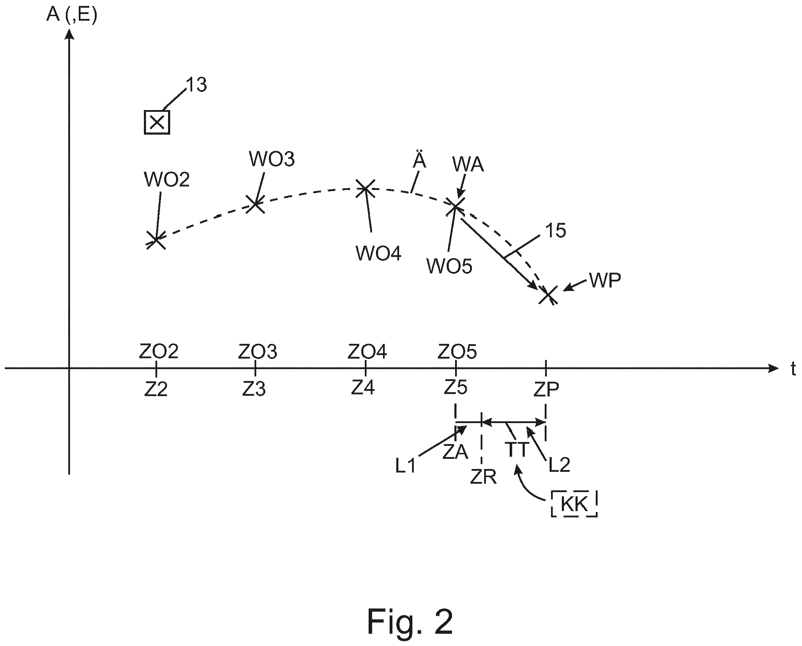

Dies ist beispielhaft in Figur 2 dargestellt, wobei hier stellvertretend für die Ortswerte WO nur der jeweilige Azimut A (Wertebereich -180° [ausgeschlossen] bis + 180° [eingeschlossen]) dargestellt ist. Die Änderungsrate Ä wird allgemeingültig ermittelt, d.h. wird auch für die "Zukunft", also für Zeiten t, die nach dem letzten Ortungszeitpunkt ZO5 liegen, ermittelt.

In einer alternativen Ausführungsform wird die zeitliche Folge 16 auf ein kritisches Ereignis EE hin verändert. Im vorliegenden Beispiel ist das kritische Ereignis ein Wechsel zwischen zwei Warnmodulen 12 am Objekt 2 (zweites nicht dargestellt), da die Bedrohung 6 zwischen den Zeitpunkten Z2 und Z3 den Erfassungsbereich des einen verlässt und in den Erfassungsbereich des anderen eintritt. Die beiden Warnmodule 12 sind jedoch nicht exakt aufeinander abgestimmt, so dass sich beim Übergang zwischen ihnen ein Sprung in den Ortungswerten WO ergeben würde. Um die Filterergebnisse, d.h. die Änderungsrate Ä nicht zu verfälschen, werden bis zum Auftreten des ersten Ortungswertes WO des übernehmenden Warnmoduls 12 (hier ab dem Zeitpunkt Z3) die schon ermittelten Ortungswerte WO des vorherigen Warnmoduls 12 in der Folge 16 gelöscht, in Fig. 2 symbolisch als Löschung 13 angedeutet.

Das DIRCM-Modul 18 enthält weiterhin einen Prädiktor 24. Der Prädiktor 24 ist wie folgt eingerichtet bzw. arbeitet im Betrieb wie folgt: Der Prädiktor geht von einem Ausgangswert WA aus, vorliegend ist hier der jeweils jüngste verfügbare Ortungswert WO gewählt, vorliegend also der Ortungswert WO5, da dieser dem spätesten Ortungszeitpunkt ZO5 entspricht. Ausgehend von diesem Ausgangswert WA und dem dazugehörigen Ortungszeitpunkt ZO5 als Ausgangszeitpunkt ZA ermittelt der Prädiktor 24 basierend auf der Änderungsrate Ä einen Prädiktionswert WP für einen Ort O, an dem sich die Bedrohung 6 zu einem Prädiktionszeitpunkt ZP vermutlich befinden wird.

Der Prädiktionszeitpunkt ZP wird dabei wie folgt gewählt: Im vorliegenden DIRCM-System 10 ist durch dessen konstruktive Auslegung, die damit verbundenen Signallaufzeiten, Verarbeitungszeiten von Daten, motorische Antriebe, Trägheiten, auch für die Ausrichtung des DIRCM-Modul 18 mit seinem Zielbereich 20 auf einen beliebigen Punkt in dessen generellem Erfassungsbereich usw. folgendes bekannt: Vom Anliegen des letzten Ortungswertes (hier WO5) der Folge 16 an der Schnittstelle 14 bis zur Ermittlung des Prädiktionswertes WP und dem Einschwenken des Zielbereiches 20 auf diesen Prädiktionswert WP wird insgesamt höchstens die Laufzeit L2 benötigt, in Figur 1 wiederum angedeutet durch einen Pfeil.

Als ein Referenzzeitpunkt ZR wird daher der Zeitpunkt der Bereitstellung des letzten Wertes der Folge 16 an der Schnittstelle 14 gewählt. Als eine Totzeit TT wird die (als konstant angenommene) Laufzeit L2 gewählt. Daher wird der Prädiktionszeitpunkt ZP=ZR+TT=ZR+L2 gewählt.

Für die Prädiktion basierend auf dem Ortungswert WO5 zum Ortungszeitpunkt ZO5 bis zum Prädiktionszeitpunkt ZP wird dagegen die Summe (ZP-ZR)+L1, hier L2+L1 genutzt.

Somit ist sichergestellt, dass zum Prädiktionszeitpunkt ZP der Zielbereich 20 in jedem Fall sicher auf den Ort O entsprechend dem Prädiktionswert WP ausgerichtet ist. Die Prädiktion ist in Figur 2 durch einen Pfeil 15 symbolisiert.

In einer alternativen, nicht dargestellten Ausführungsform kann der Referenzzeitpunkt ZR gleich dem Ausgangszeitpunkt ZA gewählt werden. Die Totzeit TT entspricht dann der Summe der Laufzeiten L1 + L2.

In einer alternativen Ausführungsform wird die Laufzeit L2 abhängig von einer Kenngröße KK gewählt, hier der Winkelabweichung einer aktuellen Ausrichtung des DIRCM-Moduls 18 von der Ausrichtung auf den Sollwert WS. Die Laufzeit L2 wird also variabel ermittelt, indem zu einer konstanten Zeit für die elektronische Datenverarbeitung die vermutlich benötigte Zeit für das Einschwenken des DIRCM-Moduls 18 in Form der Kenngröße KK berücksichtigt wird (in Fig. 2 nur symbolisch angedeutet). Hierzu wird die festgestellte Winkelabweichung durch die Winkelgeschwindigkeit des Einschwenkens dividiert. Der Prädiktionszeitpunkt ZP ergibt sich nach wie vor als ZP=ZR+L2. L2 ist jedoch nun dynamisch bestimmt. Der Prädiktionszeitpunkt ZP liegt damit in der Regel früher, als wenn - wie oben - die ungünstigste Einschwenkzeit (konstantes L2) stets berücksichtigt wird.

In einer alternativen Ausführungsform berücksichtigt der Prädiktor 24 auch Navigationsdaten 28 des Objekts 2 bei seiner Prädiktion des Prädiktionswertes WP. Vorliegend sind die Navigationsdaten 28 die aktuellen bzw. aus einem bestimmten Ausweichmanöver vor der Bedrohung 6 prädizierbaren Roll-, Nick- und Gierraten des Flugzeuges.

In einer alternativen Ausführungsform berücksichtigt der Prädiktor 24 auch Manöverdaten 30 der Bedrohung 6 bei seiner Prädiktion des Prädiktionswertes WP. Vorliegend sind die Manöverdaten 30 als bekannt angenommene Rahmengrößen der zukünftigen Flugbahn der Bedrohung 6, nämlich ein Flugbahnbereich, der im Rahmen der Manövermöglichkeiten der Bedrohung aufgrund dessen Massenträgheit / Antrieb / grundlegender Manövrierfähigkeit liegt.

Der ermittelnde Prädiktionswert WP wird nun vom Prädiktor 24 an das DIRCM-Modul 18 als dessen Sollwert WS übermittelt. Das DIRCM-Modul 18 wird nun mit seinem Zielbereich 20 auf den Sollwert WS hin eingeschwenkt (durch einen Pfeil 32 angedeutet), denn das DIRCM-Modul 18 erwartet die Bedrohung nun am Ort O des Prädiktionswertes WP, der dem Sollwert WS entspricht. Inzwischen ist der Prädiktionszeitpunkt ZP im Zeitpunkt Z6 tatsächlich erreicht. Die Prädiktion des Prädiktors 24 war nicht exakt, die Bedrohung 6 befindet sich tatsächlich im Zeitpunkt Z6 am Ort O6; dieser liegt aufgrund der qualitativ hochwertigen Prädiktion jedoch nur geringfügig neben dem prädizierten Ort des Prädiktionswertes WP=WS, so dass die Bedrohung 6 noch im Zielbereich 20 liegt. Die Bedrohung 6 wird daher von DIRCM-Modul 18 bereits im ersten Anlauf detektiert und geortet. Ein erfolgreiches Tracking und Jamming kann sich anschließen und die Bedrohung 6 erfolgreich vom Objekt 2 abgewehrt werden.

In der o.g., nicht dargestellten Ausführungsform enthält das DIRCM-System 10 zwei DIRCM-Module 18. Anhand des Prädiktionswertes WP wird das in der Figur 1 dargestellte DIRCM-Modul 18 zur Ausrichtung auf die Bedrohung 6 ausgewählt, da der Prädiktionswert WP in dessen Erfassungs- bzw. Bestrahlungsbereich, jedoch nicht im Bestrahlungsbereich des anderen, nicht dargestellten DIRCM-Moduls 18 liegt.

Das DIRCM-System 10 enthält weiterhin eine hier nur symbolisch angedeutete Steuereinheit 26. Diese ist dazu eingerichtet bzw. arbeitet im Betrieb wie folgt: Sie dient der Ausführung des geschilderten Verfahrens mithilfe des restlichen DIRCM-Systems 10 (also außer der Steuereinheit 26) und des Warnmoduls 12.

### Bezugszeichenliste

- 2: Objekt
- 4: Luftraum
- 6: Bedrohung
- 8: DIRCM-Schutzanordnung
- 10: DIRCM-System
- 12: Warnmodul
- 13: Löschung
- 14: Schnittstelle
- 15: Pfeil
- 16: zeitliche Folge
- 18: DIRCM-Modul
- 20: Zielbereich
- 22: Filter
- 24: Prädiktor
- 26: Steuereinheit
- 28: Navigationsdaten
- 30: Manöverdaten
- 32: Pfeil

- t: Zeit
- Z: Zeitpunkt
- O: Ort
- ZO: Ortungszeitpunkt
- WO: Ortungswert
- A: Azimut
- E: Elevation
- L: Laufzeit
- WS: Sollwert
- ZS: Startzeitpunkt
- WA: Ausgangswert
- ZA: Ausgangszeitpunkt
- ZP: Prädiktionszeitpunkt
- WP: Prädiktionswert
- ZR: Referenzzeitpunkt
- TT: Totzeit
- KK: Kenngröße
- EE: Ereignis
- Ä: Änderungsrate

## Patentansprüche

1. Verfahren zum Betreiben eines an einem Objekt (2) zusammen mit einem Warnmodul (12) fest angebrachten DIRCM-Systems (10) einer DIRCM-Schutzanordnung (8) zum Schutz des Objekts (2) gegen eine sich annähernde Bedrohung (6), die sich zu einem jeweiligen Zeitpunkt (Z) an einem jeweiligen Ort (O) befindet, wobei das DIRCM-System (10) enthält:
- mindestens eine Schnittstelle (14) zu dem Warnmodul (12), das dazu eingerichtet ist, die Bedrohung (6) zu detektieren und zeitlich wiederholt jeweilige Ortungswerte (WO) von Orten (O) zu ermitteln, an denen die Bedrohung (6) zu einem jeweiligen Ortungszeitpunkt (ZO) geortet wurde, und die Ortungswerte (WO) als zeitliche Folge (16) bereitzustellen,
- mindestens ein DIRCM-Modul (18), welches dazu eingerichtet ist, anhand eines Sollwertes (WS) eines Ortes (O) auf die Bedrohung (6) ausgerichtet zu werden und ab einem Startzeitpunkt (ZS) die Bedrohung (6) zu detektieren,
bei dem im Falle einer vom Warnmodul (12) detektierten Bedrohung (6):
- an der Schnittstelle (14) die zeitliche Folge (16) von jeweiligen Ortungswerten (WO) empfangen wird, die mindestens eines der Warnmodule (12) an der Schnittstelle (14) bereitstellt,
- ein Prädiktionszeitpunkt (ZP) gewählt wird, an dem ein Prädiktionswert (WP) für einen Ort (O) zu ermitteln ist, an dem sich die Bedrohung (6) zum Prädiktionszeitpunkt (ZP) vermutlich aufhalten wird,
- mit Hilfe eines Filters (22) durch Filterung der zeitlichen Folgen (16) der Ortungswerte (WO) eine Änderungsrate (Ä) der Ortungswerte (WO) über der Zeit (t) ermittelt wird,
- mit Hilfe eines Prädiktors (24) ausgehend von einem der Ortungswerte (WO) als Ausgangswert (WA) und dem dazugehörigen Ortungszeitpunkt (ZO) als Ausgangszeitpunkt (ZA) anhand der Änderungsrate (Ä) der Prädiktionswert (WP) für den vermutlichen Ort (O) der Bedrohung (6) am Prädiktionszeitpunkt (ZP) ermittelt wird,
- der Prädiktionswert (WP) wenigstens einem der DIRCM-Module (18) als Sollwert (WS) bereitgestellt wird.

2. Verfahren nach Anspruch 1,
**dadurch gekennzeichnet, dass**
der Prädiktionszeitpunkt (ZP) wie folgt gewählt wird:
- ein Zeitpunkt (Z) einer Meldung der Detektion der Bedrohung (6) vom Warnmodul (12) oder
- einer der Ortungszeitpunkte (ZO) oder
- ein Zeitpunkt (Z) einer Bereitstellung eines der Ortungswerte (WO) vom Warnmodul (12), oder
- ein Zeitpunkt (Z) einer Bereitstellung der Änderungsrate (Ä) vom Filter (22) oder
- ein Zeitpunkt (Z) einer Bereitstellung des Prädiktionswertes (WP) vom Prädiktor (24),
wird als Referenzzeitpunkt (ZR) gewählt,
- eine vermutete Totzeit (TT) der DIRCM-Schutzanordnung (8) ausgehend vom Referenzzeitpunkt (ZR) wird ermittelt,
- der Prädiktionszeitpunkt (ZP) wird als Zeitpunkt gewählt wird, der um die vermutete Totzeit (TT) nach dem Referenzzeitpunkt (ZR) liegt.

3. Verfahren nach Anspruch 2,
**dadurch gekennzeichnet, dass**
die vermutete Totzeit (TT) konstant gewählt wird.

4. Verfahren nach Anspruch 2,
**dadurch gekennzeichnet, dass**
die vermutete Totzeit (TT) anhand mindestens einer Kenngröße (KK) dynamisch ermittelt wird.

5. Verfahren nach einem der vorhergehenden Ansprüche,
**dadurch gekennzeichnet, dass**
das Objekt (2) ein mobiles Objekt ist und der Prädiktor (24) den Prädiktionswert (WP) auch anhand von Navigationsdaten (28) des Objekts (2) ermittelt.

6. Verfahren nach einem der vorhergehenden Ansprüche,
**dadurch gekennzeichnet, dass**
der Prädiktor (24) den Prädiktionswert (WP) auch anhand von vermuteten Manöverdaten (30) der Bedrohung (6) ermittelt.

7. Verfahren nach einem der vorhergehenden Ansprüche,
**dadurch gekennzeichnet, dass**
die von einem der Warnmodule (12) bereitgestellte zeitliche Folge (16) auf ein kritisches Ereignis (EE) hin verändert wird, bevor sie vom Filter (22) gefiltert wird.

8. Verfahren nach einem der vorhergehenden Ansprüche,
**dadurch gekennzeichnet, dass**
das Filter (22) wiederholt ausgewertet wird und die Änderungsrate (Ä) anhand wenigsten zweier der Auswertungen ermittelt wird.

9. Verfahren nach einem der vorhergehenden Ansprüche,
**dadurch gekennzeichnet, dass**
das DIRCM-System (10) mindestens zwei DIRCM-Module (18) enthält, wobei anhand des Prädiktionswertes (WP) und/oder der Änderungsrate (Ä) und/oder wenigstens einem der Ortungswerte (WO) wenigstens eines der DIRCM-Module (18) zur Ausrichtung auf die Bedrohung (6) ausgewählt wird.

10. DIRCM-System (10) zum Schutz eines Objekts (2) gegen eine sich annähernde Bedrohung (6), die sich zu einem jeweiligen Zeitpunkt (Z) an einem jeweiligen Ort (O) befindet,
- mit mindestens einer Schnittstelle (14) zu einem Warnmodul (12), das dazu eingerichtet ist, die Bedrohung (6) zu detektieren und zeitlich wiederholt jeweilige Ortungswerte (WO) von Orten (O) zu ermitteln, an denen die Bedrohung (6) zu einem jeweiligen Ortungszeitpunkt (ZO) geortet wurde, und die Ortungswerte (WO) als zeitliche Folge (16) an der Schnittstelle (14) bereitzustellen, wobei über die Schnittstelle (14) die zeitliche Folge (16) der Ortungswerte (WO) empfangbar ist,
- mit mindestens einem fest am Objekt anbringbaren DIRCM-Modul (18), welches dazu eingerichtet ist, anhand eines Sollwertes (WS) eines Ortes (O) auf die Bedrohung (6) ausgerichtet zu werden und ab einem Startzeitpunkt (ZS) die Bedrohung (6) zu orten,
- mit einem mit der Schnittstelle (14) verbundenen Filter (22), das dazu eingerichtet ist, durch Filterung der zeitlichen Folgen (16) der Ortungswerte (WO) eine Änderungsrate (Ä) der Ortungswerte (WO) über der Zeit (t) zu ermitteln,
- mit einem Prädiktor (24), der dazu eingerichtet ist, ausgehend von einem der Ortungswerte (WO) als Ausgangswert (WA) und dem dazugehörigen Ortungszeitpunkt (ZO) als Ausgangszeitpunkt (ZA) anhand der Änderungsrate (Ä) einen Prädiktionswert (WP) für einen Ort (O) der Bedrohung (6) zu ermitteln, an dem sich die Bedrohung (6) zum Prädiktionszeitpunkt (ZP) vermutlich befinden wird,
- wobei das DIRCM-System (10) dazu eingerichtet ist, den Prädiktionswert (WP) wenigstens einem der DIRCM-Module (18) als Sollwert (WS) bereitzustellen,
- mit einer Steuereinheit (26), die zusammen mit dem restlichen DIRCM-System (10) und dem Warnmodul (12) dazu eingerichtet ist, das Verfahren nach einem der vorhergehenden Ansprüche auszuführen.

11. DIRCM-Schutzanordnung (8), mit dem DIRCM-System (10) nach Anspruch 10, und mit dem Warnmodul (12), das über die Schnittstelle (14) mit dem DIRCM-System (10) mindestens zum Empfang der Folge (16) der Ortungswerte (WO) verbunden ist.

12. Objekt (2), mit einem DIRCM-System nach Anspruch 10 oder mit einer DIRCM-Schutzanordnung (8) nach Anspruch 11.

13. Objekt (2) nach Anspruch 12,
**dadurch gekennzeichnet, dass**
das Objekt (2) ein Flugzeug ist.
